Europäisches Patentamt

European Patent Office

Office européen des brevets

(19)

(11) Publication number: **0 144 478 B1**

# EUROPEAN PATENT SPECIFICATION

(12)

(45) Date of publication of patent specification: **03.07.91**

(51) Int. Cl.⁵: **B62D 65/00, B65G 33/02, B23Q 7/14**

(21) Application number: **83307594.8**

(22) Date of filing: **13.12.83**

(54) **Indexing conveyor for robotic production operations.**

| | |
|---|---|
| (43) Date of publication of application:<br>**19.06.85 Bulletin 85/25** | (73) Proprietor: **Hoehn, Robert Andrew**<br><br>**Monticello Township Kansas(US)** |
| (45) Publication of the grant of the patent:<br>**03.07.91 Bulletin 91/27** | (72) Inventor: **Hoehn, Robert Andrew**<br><br>**Monticello Township Kansas(US)** |
| (84) Designated Contracting States:<br>**AT BE CH DE FR GB IT LI SE** | |
| (56) References cited:<br>**EP-A- 0 030 882**<br>**DE-A- 2 048 246**<br>**GB-A- 958 693**<br>**US-A- 4 408 540** | (74) Representative: **Atkinson, Ralph et al**<br>**Fitzpatricks Europe House World Trade Centre**<br>**London E1 9AA(GB)** |

Rank Xerox (UK) Business Services

EP 0 144 478 B1

## Description

The present invention relates to an apparatus and a method for indexing successive products removed from a conveyor comprising the features of the first parts of claim 1 and 10 which are known from the prior art conveyor system described in GB-A-958 693.

Most industrial robots are designed to perform operations on products under fabrication only when the products are stationary at a robot station, whereas most manual production operations are performed while the products are continuously moving. The integration of robotic operations with manual operations in the same manufacturing or assembly facility has, therefore, created the need for conveyor systems capable of both continuous and intermittent movement.

The integration of robots with moving conveyors requires the products to be disengaged from a continuously moving constant speed conveyor, rapidly indexed to a stationary position at a robot, and, after the robotic operation is complete, reinserted into the identical sequence on the conveyor. The disengagement, indexing, robotic operation and return of the product must all be accomplished within the time limit established by the speed of the moving conveyor, i.e. in a conveyor system which operates at 60 product assemblies per hour, a total cycle time of one minute is available.

The design objective of such an integrated conveyor system is to provide a means for indexing products from the moving conveyor to the stationary position at a robot station in a smooth and safely controlled manner, while allowing the maximum amount of the total time cycle for the operation of the robot. Time, therefore, is a critical factor. Furthermore, the system should have the ability to isolate the robot from the moving conveyor, such that minor delays in robot functions do not cause the moving conveyor to stop; the ability to accommodate singular or multiple robot stations; the ability to accommodate additional stations in the future; and require a minimum of factory floor space.

Known solutions to the problem of transferring products from a moving conveyor to a stationary position have consisted of, for example, separate chain conveyors which index and stop at the robots, or a system known as "Cartrak" which utilises specially designed pallets which index by the interaction of a mechanism on each pallet with a continuously rotating drive tube. The prior art indexing chain conveyor requires all products to be indexed simultaneously, thereby requiring excessively oversized drive power units and also requires the direct linking of the robot time cycle to the continuously moving conveyor timing. Thus, if a robot malfunctions, the conveyor immediately stops, which is extremely costly in manufacturing an assembly facility. Indexing chain conveyors also, typically, require large pits in the plant floor to connect the chain in a loop and to mount the drive machinery.

The Cartrak system requires separate automatic or manual handling apparatus to transfer the products from the continuously moving conveyor to the separate Cartrak pallets and back onto the moving conveyor, plus an additional length of the Cartrak system is required to return empty pallets to the system start point, thus Cartrak requires excessive amounts of floor space and is costly. Therefore, these prior solutions have proven to be complicated and expensive.

Accordingly, the present invention is directed to an efficient and economical means of indexing products from a continuously moving conveyor to a stationary position for robotic operations or other operations requiring a stationary product, and then returning them to the moving conveyor, if necessary.

For example, in an automotive assembly plant, car bodies are typically conveyed on four-wheeled dollies which are towed along a floor track by a continuously moving chain conveyor. An object of the present invention is to provide a system for indexing a car body, placed on the four-wheeled dolly, to the robot station and present both as a unit in a stationary position so the operation by the robot can be performed.

According to the present invention, there is provided apparatus of the aforesaid type, characterised by an operating station shuttle carriage, means for coupling said carriage to a disengaged dolly, drive means for indexing said carriage, with said dolly and independently of said conveyor, to said operating station and for reversing said carriage to engage with another dolly, a tandem shuttle carriage, means for coupling said tandem shuttle carriage to a dolly, and drive means for indexing said tandem shuttle carriage, with said dolly and independently of said conveyor, along a path between said conveyor and said operating station shuttle carriage and for reversing said tandem shuttle carriage to engage with another dolly.

While the robot is performing its production operation, the shuttle carriage may return to its home position. Meanwhile, a subsequent, independent shuttle carriage, placed in tandem with the operating station shuttle carriage, may engage the dolly and, upon completion of the robots operation, transfer it from the operating station, such as to a subsequent station or to a position for re-engagement with the moving chain conveyor.

In many applications, two or more carriages in tandem may precede the robot operating station to provide an accumulation of dollies. Additional sections may also be included to provide accumulation as desired at other stages of the indexing conveyor system. In other applications, however, particularly those not associated with assembly lines, a single tandem shuttle carriage is sufficient.

The invention will now be described by way of example only with reference to the accompanying drawings, in which:

Fig. 1 is a fragmentary, plan view of the indexing conveyor of the present invention, showing an indexing section associated with a robot station and the beginning of the next indexing section, and further showing a shuttle carriage in motion to the right nearing the end of its path of travel.

Fig. 2 is a fragmentary, elevational view of the conveyor components shown in Figure 1 with the addition of the dolly and automobile product carried thereby, further showing the telescoping table of the shuttle carriage nearing full extension with the holdback dog cammed down.

Fig. 3 is a fragmentary, elevational view of the indexing conveyor showing an accumulating section preceding the section fully shown in Figure 1 and 2, the shuttle carriage seen in Figures 1 and 2 moving leftwardly and being near its home position to pick up another dolly, and the shuttle carriage of the accumulating section being shown in motion to the right to advance the next dolly and product.

Fig. 4 is an elevational view similar to Figure 3 but showing an alternative drive shaft having a variable helical thread, the shuttle carriage there illustrated being shown with its telescoping table fully extended at the final position of the shuttle carriage.

Fig. 5 is a diagrammatic, plan view of the indexing conveyor showing four indexing sections in tandem and the bypassing of a moving conveyor around the indexing conveyor sections.

Fig. 6 is a diagrammatic, elevational view of the four-section indexing conveyor shown in Fig. 5, illustrating the accumulation of dollies and their products in the first two sections.

Fig. 7 is an enlarged, fragmentary, cross-sectional view taken along line 7-7 of Fig. 3, showing the shuttle carriage in detail.

Fig. 8 is a greatly enlarged, fragmentary plan view of a portion of the drive shaft showing the followers on the shuttle carriage captured within the helical groove, the stems of the followers being shown in cross-section.

Fig. 9 is a side elevational view similiar to Fig. 8, additionally showing the swivel bar that mounts the followers beneath the carriage.

Fig. 10 is an enlarged, plan view of the shuttle carriage.

Fig. 11 is a side elevational view on a reduced scale of the carriage shown in Fig. 10, parts being broken away to reveal the telescoping table, and includes a phantom view of the telescoping table in a fully extended position to the left.

## THE CONVEYOR SYSTEM IN GENERAL

In the drawings as seen in Figs. 5 and 6, the conveyor system comprises a moving chain conveyor 20 and four independent, tandem indexer units or sections, i.e., first accumulator unit 22; the second accumulator unit 24; the operating station unit 26; and the transfer unit 28. Each of the above independent indexer units employs a uniform helical drive shaft, i.e., the first accumulator drive shaft 22a; the second accumulator drive shaft 24a; the operating station drive shaft 26a; and the transfer drive shaft 28a. In each of the above indexer units is located a shuttle carriage that is propelled by its respective drive shaft. The shuttle carriages are, respectively, the first accumulator shuttle carriage 22b; the second accumulator shuttle carriage 24b; the operating station shuttle carriage 26b; and the transfer shuttle carriage 28b. It should be noted that in the plan view of Fig. 5 the second accumulator shuttle carriage 24b and the transfer shuttle carriage 28b can not be seen because they are hidden by the overlying dolly and automobile body.

As can be seen in Fig. 6 a dolly 30 (far left) has disengaged from the moving chain conveyor 20 and is engaged with shuttle carriage 22b for rightward indexing on the first accumulator unit 22. Note that the dolly 30 is not shown in the plan view of Fig. 5 in order that the disengagement layout of the moving chain conveyor 20 from the dolly 30 could be shown. This is accomplished by "wiping out" the chain conveyor 20 in a conventional manner by offsets 21 in the chain track which detour the chain so that it by-passes the indexing conveyor on the left side thereof as viewed in Fig. 5 looking in the direction of advancement of the conveyor system. The dolly 30 rolls rightwardly on a floor track 32 having elevated rails over the portion of the system spanned by the indexing conveyor. A dolly 34, seen in the second accumulator unit 24, can be seen rolling on the same floor track 32 and moving in a rightward direction. Shuttle carriage 26b in the operating station unit 26 is located at its home position in order to receive dolly 34 for continual movement thereof rightwardly and indexing at the robot operating station for stationary positioning. Robots 36 and 36a are illustrated, where 36 is a robot for placement of a rear windshield on an automobile and 36a is for placement of a front windshield on an automobile, as shown in Figs. 5 and 6. A dolly 38 has had the robots perform their operations on the product it carries and the transfer shuttle carriage 28b has engaged dolly 38 to transfer dolly 38 rightwardly for re-engagement of the dolly 38 with the moving chain conveyor 20.

## OPERATING STATION UNIT

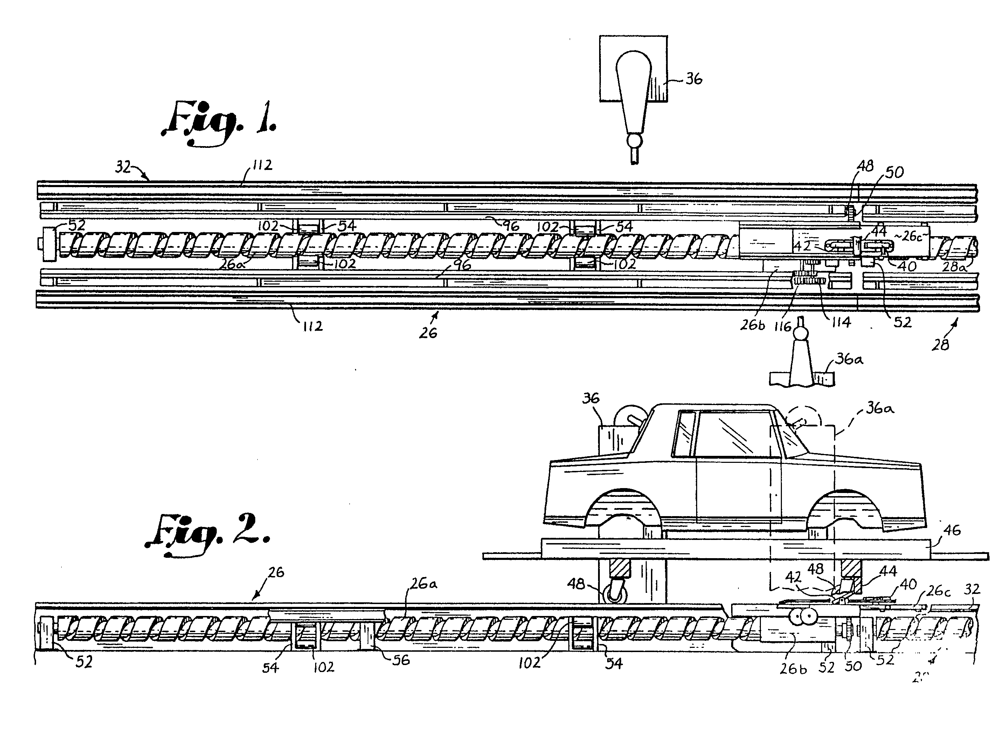

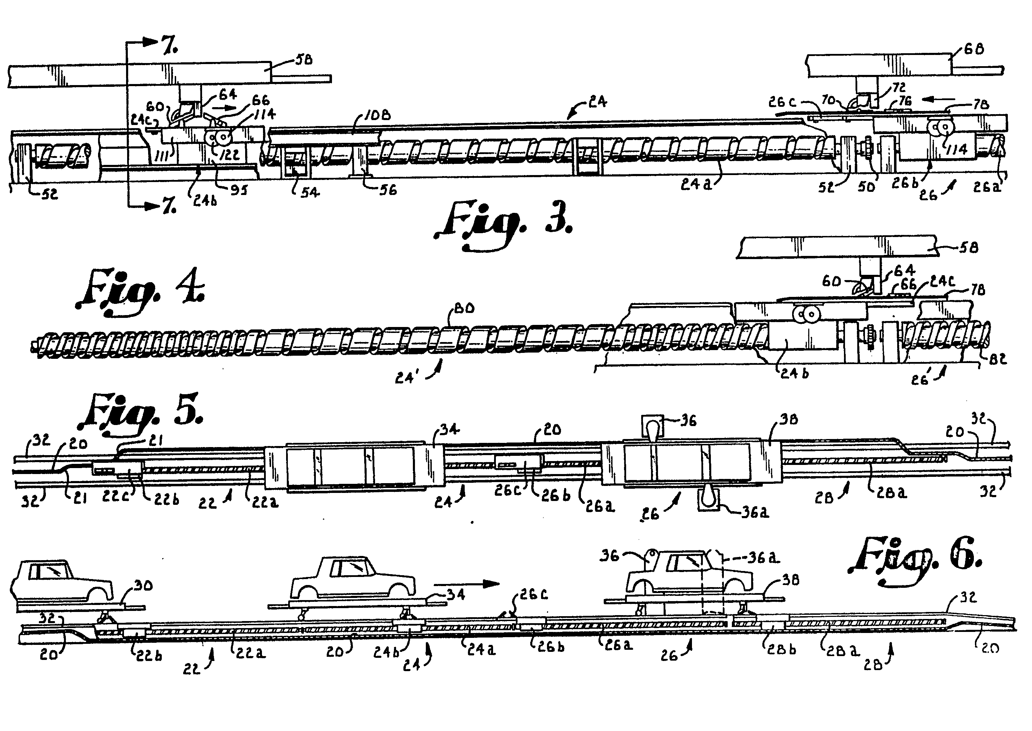

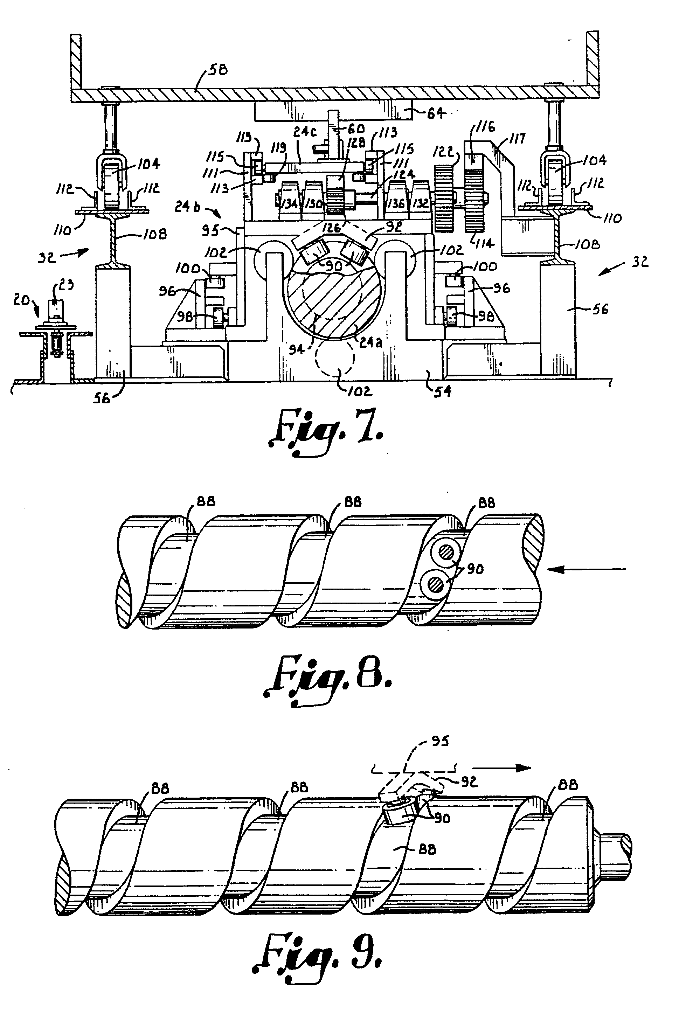

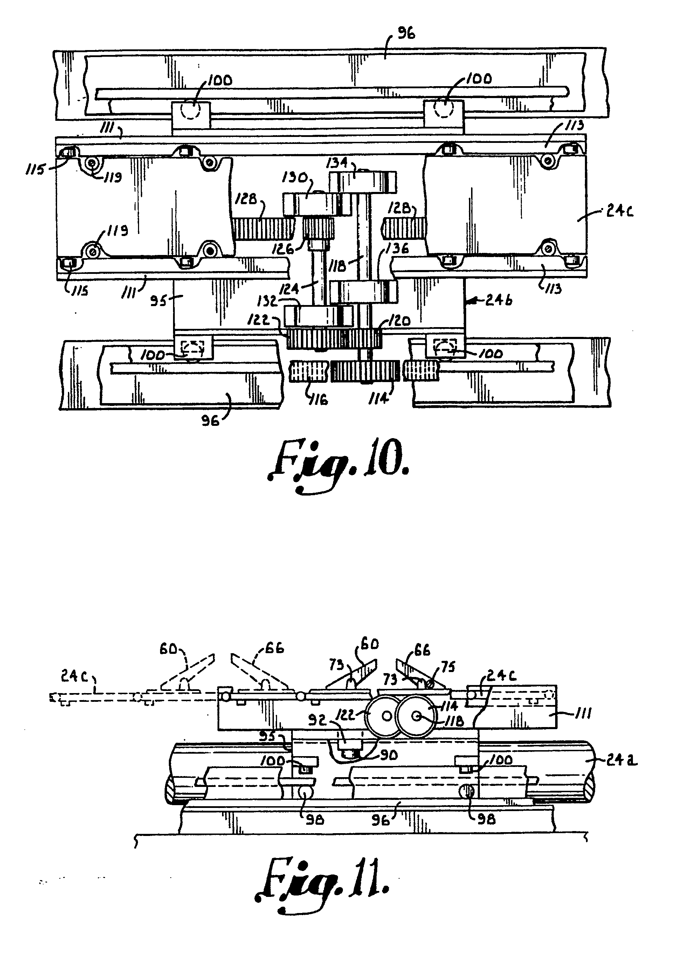

Figs. 1 and 2 show a fragmentary plan view and a fragmentary elevational view, respectively, of operating station unit 26 associated with robots 36 and 36a. The uniform helical drive shaft 26a can be seen in Figs. 1 and 2 as can the shuttle carriage 26b for this operating station unit 26. Fig. 1 shows a plan view of a telescoping table 26c of the shuttle carriage 26b nearing its full extension to the right. Fig. 2 shows a holdback dog 40 located on the table 26c and cammed to a clearing position. The telescoping table 26c has positioned a drive dog 42, which is engaged with a striker bar 44 depending from the dolly 46, so as to push the striker bar and, therefore, the dolly 46 across to the transfer unit 28 for pickup by shuttle carriage 28b. Note that dolly 46 rolls upon the floor track 32 with the caster wheels 48 located therein.

Fig. 2 further illustrates that floor track 32 is supported by spaced column supports 56. The shuttle carriage 26b travels in parallelism with the axis of the drive shaft 26a which is intermediate and parallel to the two rails of the track 32. Drive shaft 26a is adjacent the floor and is rotated through the use of a variable speed motor 48 as seen in Fig. 1. A timing chain 50 forms the drive connection from the motor 48 to the shaft 26a. The drive shaft 26a is supported in journal boxes 52 near each of its ends and is intermediately supported as at 54.

## PRODUCT ACCUMULATION UNIT

Fig. 3 shows the product accumulation unit 24 preceding the operating station unit 26 shown in Figs. 1, 2, 5 and 6. (Both the accumulation units and the operating station and transfer units comprise identical drive shafts and shuttle carriages.) The complete product accumulation unit 24 includes the uniform helical drive shaft 24a and accumulation shuttle carriage 24b, as shown in motion to the right in the process of presenting a dolly 58 for pickup by shuttle carriage 26b of the operating station unit 26. The dolly 58 is propelled to the right by engagement with the accumulation shuttle carriage 24b by means of a drive dog 60 located on the telescoping table 24c of shuttle carriage 24b. The drive dog 60 engages the striker bar 64 attached below the dolly 58. The holdback dog 66 is positioned so as to stop any forward movement of the striker bar 64 and, in turn, the dolly 58 while the dolly 58 is in positive motion.

The operating station shuttle carriage 26b is seen in Fig. 3 moving leftwardly and near its home position to pick up dolly 68. The dolly 68 is in contact with a drive dog 70 and displaces the drive dog 70 into a clear position to allow the drive dog 70 to pass thereunder behind the striker bar 72. As best seen in Fig. 11, each of the various drive and holdback dogs described and illustrated herein is of the standard, counterweighted type mounted on a pivot 73 intermediate its ends, the holdback dog being provided with a cam follower 75 extending from the counterweighted end. When the operating station shuttle carriage 26b and its telescoping table 26c clear the striker bar 72, the drive dog 70 is counterweighted so as to return the drive dog to its normal position, similar to the position of drive dog 60 in Fig. 3. Note that the holdback dog 76 is cammed by ramp 78 so as to allow free rightward movement of the dolly 68 without interference from the holdback dog 76. The holdback dog 76 will return to its normal position, as seen by holdback dog 66 in Fig. 3, shortly after leaving the pickup zone. When the shuttle carriage 26b is in its home position and the table 26c thereon is fully extended to the left, the drive dog 70 will engage the striker bar 72 in order to pick up dolly 68 for advancement to its final, stationary position at the operating station where robotic operations are performed.

Fig. 4 shows an alternative drive shaft 80 having a variable helical thread in contrast to the uniform helical thread shown in Figs. 1-3. Fig. 4 presents a typical accumulation unit 24', and the fragment of a typical operating station unit 26' as seen in Fig. 3, but instead utilizes the variable helical drive shaft 80 in the accumulation unit and a variable helical drive shaft 82 in the operating station unit 26'. This variable helical drive shaft with a lesser pitch adjacent its ends could be used in place of uniform helical drive shafts in all indexer units. The accumulation shuttle carriage 24b is here illustrated showing its telescoping table 24c fully extended to the right at the shuttle carriage's final position in the accumulation unit 24'. Note that the drive dog 60 is still in an engaged position and that the holdback dog 66 is cammed down by ramp 78 in order that the striker bar 64 may clear so as to eliminate any interference with the dolly's further movement to the right. The camming of the holdback dog 66 also allows the telescoping table 24c of the shuttle carriage 24b to clear the striker bar 64 for return of the accumulation shuttle carriage 24b to its home position.

## THE DRIVE

As seen in Figs. 1 and 2, the drive shaft 26a there shown is typical of all units and has a uniform helical groove 88 cut within the circumference of the drive shaft. This helical groove 88 of constant pitch is best shown in the enlarged views of Figs. 8 and 9, which also reveal two follower rollers 90 received in the groove 88 that are attached to a swivel bar 92 pivotally secured to the shuttle carriage and extending therebeneath.

Fig. 7 shows the shuttle carriage 24b from the rear. The shuttle carriage shown in Fig. 7 is typical of shuttle carriages in all indexer units. The swivel bar 92 is shown in Fig. 7 with the followers 90 riding within the uniform helical groove 88 of the drive shaft 24a. The solid core 94 of the drive shaft 24a is shown by phantom lines. One of the intermediate supports 54 is shown in detail and includes three rollers 102 positioned at apexes of an imaginary triangle and engaging shaft 24a to capture it and preclude any transverse movement. The shuttle carriage 24b comprises a base member 95 of inverted U-shaped configuration as viewed from the front or rear that rides upon a guide track 96 having a pair of parallel track segments located on opposite sides of the shuttle carriage parallel to the drive shaft. Front and rear rollers 98 (Fig. 11) rotatable on horizontal axes are carried by member 95 at its bottom side margins and engage the guide track 96 for movement thereon. Vertical rollers 100 located on the opposite sides of the shuttle carriage member 95 also engage the respective segments of guide track 96 and are provided in order to prevent canting of the shuttle carriage as it moves back and forth in the indexer unit.

Dolly 58 is shown in Fig. 7 with striker bar 64 located beneath the dolly 58 for engagement with drive dog 60. Dolly 58 travels along floor track 32 where casters 104 roll within the track 32. A typical dolly will have four casters to a dolly, two rolling on each side. The floor track 32 consists of the spaced columns 56 on each side of the shuttle carriage whereupon an I-beam 108 is supported on each series of columns and, additionally, a coextensive metal plate 110 overlies the I-beam 108. Upon the metal plate 110 angle irons 112 are spaced apart in opposed relationship in order to present a track within which casters 104 ride.

As shuttle carriage 24b moves back and forth in its travel the telescoping table 24c is constantly in motion relative to the movement of the shuttle carriage. The table 24c of the shuttle carriage 24b is geared to telescope to the left as the shuttle carriage travels in a leftward motion and to the right as the shuttle carriage undergoes rightward motion. The shuttle carriage is shown in a plan view in Fig. 10, in a rear view in Fig. 7, and is additionally shown in an elevational view in Fig. 11 on a reduced scale relative to Fig. 10. The table 24c is horizontally disposed and elongated in its directions of movement, and is carried by two spaced, upstanding side plates 111 on the top of base member 95. Each plate 111 is provided with a pair of vertically spaced, horizontally extending rails 113 which receive a corresponding series of rollers 115 along the adjacent longitudinal edge of the table 24c. Two rows of rollers 119 on vertical axes disposed on the underside of table 24c are engageable with respective lower rails 113 to impart lateral stability to the longitudinal motion of the table 24c.

The table 24c is moved relative to the shuttle carriage 24b by a reduction gearing system beneath the table 24c as best seen in Fig. 10. A drive gear 114 meshes with an inverted rack 116 parallel to and substantially coextensive with the drive shaft 24a of the indexer unit and mounted by spaced arms 117 to the right I-beam 108. This rotates drive shaft 118 which, in turn, rotates intermediate gear 120 on drive shaft 118 in mesh with intermediate gear 122 and thereby rotates a shaft 124. Note that in Fig. 7 drive shaft 118 cannot be seen because it is hidden behind shaft 124. Shaft 124 in turn rotates pinion 126 which is rigid with shaft 124, the pinion 126 engaging an internal rack 128. The rack 128 is parallel to the axis of shaft 24a and is securely fastened to the underside of table 24c in order to present the geared face of the rack for enmeshment with pinion 126. Shaft 124 is secured to the shuttle carriage by journal boxes 130 and 132 on the top of member 95. Drive shaft 118 is secured to shuttle carriage 24b by journal boxes 134 and 136 which are also on top of member 95 beneath the table 24c.

The reduction gearing system as presented in Fig. 10 is designed so that when the drive gear 114 is rotated in a leftward direction (counter clockwise) the pinion 126 will drive the rack 128 leftwardly and therefore displace the table 24c leftwardly. Fig. 10 shows table 24c centered in relation to the shuttle carriage 24b, this positioning occuring when the shuttle carriage 24b has reached its midway point in relation to the ends of the drive shaft. As shuttle carriage 24b moves in a rightward direction the table 24c because of the reduction gearing will also move in a rightward direction a proportionally reduced distance.

Fig. 11 is a side elevational view on a reduced scale of the carriage shown in Fig. 10. The solid lines of table 24c, the drive dog 60, and holdback dog 66 represent the position of the table in relation to the shuttle carriage when the shuttle carriage is at its midway point in relation to the drive shaft, e.g. the shuttle carriage 24b would be centered 10 feet from each end of a 20-foot drive shaft. The phantom view of the table 24c, drive dog 60 and holdback dog 66 shows the telescoping table in a fully extended position to the left, as would be the relation of the components when the shuttle carriage is at its home position adjacent the left end of the respective drive shaft.

## SUMMARY OF OPERATION

The operation of the indexing conveyor of the present invention will now be summarized with reference to the exemplary 4-section (or 4-unit) system disclosed herein, particularly Figs. 5 and 6. At the left end of Fig. 6, it may be seen that the floor track 32 is already elevated in preparation for delivery of the dollies to the indexing conveyor. The moving chain conveyor 20 is likewise elevated to maintain engagement with dolly 30 until the chain is wiped out, which occurs at the first chain track offset 21 just prior to the course of the chain being directed downwardly and returned to floor level as seen in Fig. 6. It should be appreciated that at this time the pusher dog on the chain that was engaging the striker bar of dolly 30 is wiped out sidewise out of engagement with the striker bar so that the dolly is completely disengaged from the moving conveyor 20. (See Fig. 7 where the chain conveyor 20 is shown during its detour around the indexing conveyor and one of the upstanding pusher dogs 23 is illustrated.)

The shuttle carriage 22b in Fig. 6 is shown moving rightwardly away from its home position after picking up the dolly 30. It should be appreciated that at the extreme left or home position the telescoping table 22c has sufficient leftward reach to position its drive dog behind the striker bar of the dolly 30.

As discussed above, the function of the first indexer unit 22, in conjunction with the second unit 24, is to accumulate dollies and their products prior to delivery thereof to the operating station indexing unit 26. This is illustrated in Fig. 6 with respect to the dollies 30 and 34 as previously described. It is important to understand, however, that the drives for the two accumulator units 22 and 24 are entirely independent so that each accumulator unit can be controlled as desired to accomplish product accumulation. Accordingly, although manual control of the drive motor of each of the accumulator units could be employed, normally an automatic control system would program the operation of the accumulator units 22 and 24 in accordance with the time constraints dictated by the moving conveyor 20, such that each dolly and its associated product will be reunited with the moving conveyor 20 at the right end of the indexing conveyor (Figs. 5 and 6) at the same point on the moving conveyor from which it was previously disengaged. In this manner, the manual operations performed on the products both prior to and subsequent to the indexing conveyor are not interrupted.

Likewise, the drive motors for the operating station indexing unit 26 and the transfer unit 28 are independently controlled and preferably programmed to provide a totally automatic indexing conveyor synchronized with the moving conveyor 20. In Figs. 5 and 6 the shuttle carriage 26b has returned to its home position at the pickup zone where it will receive the next dolly (dolly 34) once it is delivered by the second accumulator unit 24. The shuttle carriage 28b of the transfer unit 28 is also in its home position ready to pull the dolly 38 from the robot station once the robotic operation is finished. Transfer back to the chain conveyor 20 is completed upon the advancement of carriage 28b to its final, extreme right position (not shown), at which time the telescoping table 28c will be fully extended to the right to position the striker bar of dolly 38 for re-engagement with a pusher dog on the chain conveyor 20 which is "wiped in" to a disposition adjacent the striker bar for re-engagement therewith as illustrated in Figs. 5 and 6. The floor track 32 then has a downward incline and is returned to actual floor level along with the moving chain conveyor 20.

Since the chain conveyor 20 moves at constant speed, it is of course necessary to accelerate the products in their travel to the robot station so that they can be maintained thereat in a stationary position for the period of time required for the robotic operation. Accordingly, the motor speed (and hence the drive shaft speed) in each of the indexer units is varied between the home and final positions of the respective carriages in order to provide initial acceleration away from the home position followed typically by a period of constant speed, and then followed by deceleration to the final position which, in the case of the indexer unit 26, is the stationary position at the robot station. (It is understood that once delivered to the robot station, the robot mechanism holds the delivered dolly stationary and thus the shuttle carriage may commence reverse movement to the home position immediately after delivery of the dolly.) The threaded drive shaft of the present invention is particularly advantageous in this respect due to the high mechanical advantage obtained by engagement of the carriage followers 90 within the helical groove 88 as best seen in Figs. 8 and 9. Furthermore, being captured within the groove 88, the drive is positive in nature and permits precise positioning of the shuttle carriage in its home and final positions at the opposed ends of the drive shaft.

As a typical example utilizing indexer units or sections that provide 18 feet (5.5 meters) of travel along the drive shaft, the shuttle carriage would be accelerated to a speed of 200 feet per minute (61 meters per minute) in the first 2 1/2 feet (0.75 meter) of travel, maintained at a constant speed for 13 feet (4 meters), and then decelerated to a stationary position in the remaining 2 1/2 feet (0.75 meter). It should be appreciated that this same acceleration and deceleration characteristic can be achieved using the variable pitch shaft 80 shown in Fig. 4, in which case the drive motor would turn at constant speed.

It should also be appreciated that the utilization of the telescoping table on each of the shuttle carriages effectively decreases the travel time of the dolly propelled by each indexing unit because of the left-to-right displacement of the table as the shuttle carriage moves from its home to its final position. The additional travel caused by this displacement also facilitates the pick up and delivery of the dollies since the telescoping table, upon which the drive and holdback dogs are mounted, has the ability to reach over the end of its associated drive shaft so that the drive dog can be properly positioned beneath a dolly to be picked up, and imparts to the shuttle carriage the capability at its final position of delivering the dolly to the next unit.

## Claims

1. Apparatus for indexing successive products removed from a conveyor (20), wherein said products are carried by dollies (30,34,38) and said dollies engage with said conveyor, comprising
    means (21) for successively disengaging said dollies from said conveyor, and
    an operating station for operating on a product while said product is held stationary, characterised by:
    an operating station shuttle carriage (26b),
    means for coupling said carriage to a disengaged dolly,
    drive means for indexing said carriage, with said dolly and independently of said conveyor, to said operating station and for reversing said carriage to engage with another dolly,
    a tandem shuttle carriage (22b,24b;28b),
    means for coupling said tandem shuttle carriage to a dolly, and
    drive means for indexing said tandem shuttle carriage, with said dolly and independently of said conveyor, along a path between said conveyor and said operating station shuttle carriage and for reversing said tandem shuttle carriage to engage with another dolly.

2. Apparatus according to claim 1, characterised in that said tandem shuttle carriage is a first accumulator shuttle carriage (22a) arranged to index dollies from said conveyor.

3. Apparatus according to claim 2, characterised in that a second accumulator shuttle carriage (24a) is positioned between said first accumulator shuttle carriage and said operating station shuttle carriage.

4. Apparatus according to claim 1, characterised in that said tandem shuttle carriage is a transfer shuttle carriage (28a) for returning dollies from said operating shuttle carriage to said conveyor.

5. Apparatus according to any preceding claim, characterised in that said drive means, for indexing said operating station shuttle carriage (26b) or for indexing said tandem shuttle carriage, includes:
    a drive shaft (26a) extending along said path and having a helical thread,
    follower means on said shuttle carriage (26b) engaging said shaft in said thread and
    rotating means (48) coupled with said shaft for rotating the same in one direction at a rotational speed, causing said first shuttle carriage (26b) to advance said operating station at a greater speed than that of said conveyer (20) and, thereafter, for rotating said shaft (26a) in the opposite direction to move said carriage (26b) in said reverse direction.

6. Apparatus according to claim 5, characterised in that said drive shaft (26a) has a constant pitch, said rotating means (48) is operable to vary the speed of said shaft (26a) to accelerate said operating station shuttle carriage (26b) and to subsequently decelerate said carriage to terminate advancement thereof.

7. Apparatus according to claim 5, characterised in that said helical thread has a lesser pitch adjacent the ends of said drive shaft (26a), wherein said rotating means (48) is operable to rotate said shaft at a constant speed to accelerate said shuttle carriage (26b) and subsequently decelerate said shuttle carriage.

8. Apparatus according to claim 1, characterised by three tandem shuttle carriages disposed in a substantially in-line relationship for successive shuttling of the disengaged dollies from the moving conveyor (20) to said operating station and then back to said moving conveyor, comprising a first accumulator shuttle carriage (22a) arranged to index dollies from said conveyor, a second accumulator shuttle carriage (24a) arranged to index dollies from said first accumulator shuttle carriage to said operating station shuttle carriage and a transfer shuttle carriage arranged to return dollies from said operating shuttle carriage to said conveyor.

9. Apparatus according to any preceding claim, characterised by extending an extensible portion in a reverse direction from the operating shuttle carriage as said shuttle carriage approaches an initial position and for extending an extensible portion in a forward direction as the carriage is advanced, so as to increase the reach of said shuttle carriage and, hence, increase the effective length of its travel.

10. A method of indexing successive products removed from a conveyor, wherein said products are carried by dollies (30,34,38) and said dollies engage with said conveyor, comprising the steps of

    a) successively disengaging said dollies from said conveyor,

      characterised by:

    b) coupling disengaged dollies to an operating shuttle carriage (26b),

    c) indexing said carriage, with said dolly and independently of said conveyor, to an operating station, wherein, at said operating station, the product is operated upon while held stationary,

    d) coupling dollies to a tandem shuttle carriage,

    e) and indexing said tandem shuttle carriage, with said dolly and independently of said conveyor, along a path between said conveyor and said operating station shuttle carriage

11. A method according to claim 10, characterised in that dollies are indexed from said conveyor by said tandem shuttle carriage, whereby said tandem shuttle carriage operates as a first accumulator shuttle carriage.

12. A method according to claim 11, characterised in that dollies are transferred from said first accumulator shuttle carriage to said operating shuttle carriage by means of a second accumulator shuttle carriage.

13. A method according to claim 10, characterised in that dollies are transferred from said operating station shuttle carriage to said conveyor via said tandem shuttle carriage.

14. A method according to any of claims 10 to 13, characterised in that the operating station shuttle carriage is advanced and reversed by means of a rotatable drive shaft, having a helical thread which is rotated in one direction to advance the carriage and rotated in the opposite direction to effect reverse movement of said carriage.

**Revendications**

1. Appareil pour l'indexage de produits successifs enlevés d'un transporteur (20), dans lequel les produits sont supportés par des berceaux (30, 34, 38) et ces berceaux sont en prise avec le transporteur, comprenant :

    des moyens (21) pour dégager successivement les berceaux du transporteur, et

    un poste de travail pour opérer sur un produit tandis que ce produit est maintenu immobile, caractérisé par :

    un chariot-navette (26b) de poste de travail,

    des moyens pour accoupler le chariot à un berceau dégagé,

    un moyen d'entraînement pour indexer le chariot, avec le berceau et indépendamment du transporteur, vers le porte de travail et pour ramener le chariot afin de l'engager avec un autre berceau,

    un chariot-navette tandem (22b, 24b; 28b),

    des moyens pour accoupler le chariot-navette tandem à un berceau, et

    des moyens d'entraînement pour indexer le chariot-navette tandem, avec le berceau et indépendamment du transporteur, suivant un trajet s'étendant entre le transporteur et le chariot-navette de poste de travail et pour ramener le chariot-navette tandem en vue de l'engager avec un autre berceau.

2. Appareil suivant la revendication 1, caractérisé en ce que le chariot-navette tandem est un premier chariot-navette accumulateur (22a) propre à assurer l'indexage de berceaux à partir du transporteur.

3. Appareil suivant la revendication 2, caractérisé en ce qu'un second chariot-navette accumulateur (24a) est positionné entre le premier chariot-navette accumulateur et le chariot-navette de poste de travail.

4. Appareil suivant la revendication 1, caractérisé en ce que le chariot-navette tandem est un chariot-navette de transfert (28a) destiné à renvoyer des berceaux du chariot-navette de travail au transporteur.

5. Appareil suivant l'une quelconque des revendications précédentes, caractérisé en ce que le moyen d'entraînement destiné à indexer le chariot-navette de poste de travail (26b) ou le chariot-navette tandem comprend :

    un arbre d'entraînement (26a) qui s'étend le long du trajet et qui présente un filet hélicoïdal,

    des moyens suiveurs sur le chariot-navette (26b) attaquant l'arbre au niveau de son filet, et

un moyen de rotation (48) accouplé à l'arbre pour le faire tourner dans un sens, à une vitesse de rotation, amenant le premier chariot-navette (26b) à faire avancer le poste de travail à une vitesse supérieure à celle du transporteur (20) et ensuite pour le faire tourner dans le sens opposé afin de déplacer le chariot (26b) dans le sens inverse.

6. Appareil suivant la revendication 5, caractérisé en ce que l'arbre d'entraînement (26a) présente un pas constant, le moyen de rotation (48) peut être mis en oeuvre pour faire varier la vitesse de l'arbre (26a) afin de faire accélérer le chariot-navette de poste de travail (26b) et de ralentir ultérieurement le chariot en vue de terminer son avancement.

7. Appareil suivant la revendication 5, caractérisé en ce que le filet hélicoïdal présente un pas plus étroit à proximité des extrémités de l'arbre d'entraînement (26a), le moyen de rotation (48) pouvant être mis en oeuvre pour faire tourner l'arbre à une vitesse constante afin de faire accélérer le chariot-navette (26b) et ultérieurement de ralentir ce chariot-navette.

8. Appareil suivant la revendication 1, caractérisé par trois chariots-navettes tandem disposés en substance en ligne en vue d'un transfert en navette successif des berceaux dégagés à partir du transporteur en mouvement (20) vers le poste de travail puis en retour vers le transporteur en mouvement, comprenant un premier chariot-navette accumulateur (22a) propre à indexer des berceaux à partir du transporteur, un deuxième chariot-navette accumulateur (24a) propre à indexer des berceaux à partir du premier chariot-navette accumulateur vers le chariot-navette de poste de travail et un chariot-navette de transfert propre à renvoyer des berceaux à partir du chariot-navette de travail vers le transporteur.

9. Appareil suivant l'une quelconque des revendications précédentes, caractérisé en ce qu'une partie extensible est étendue vers l'arrière à partir du chariot-navette de travail lorsque ce chariot-navette s'approche d'une position initiale et une partie extensible est étendue vers l'avant lorsque le chariot avance, de manière à augmenter l'extension du chariot-navette et, par conséquent, la longueur effective de son déplacement.

10. Procédé pour l'indexage de produits successifs enlevée d'un transporteur, dans lequel les produits sont supportés par des berceaux (30, 34, 38) et les berceaux sont en prise avec le transporteur, comprenant les étapes consistant à :

a) dégager successivement les berceaux du transporteur, caractérisées par :

b) l'accouplement des berceaux dégagés à un chariot-navette de travail (26b),

c) l'indexage du chariot, avec le berceau et indépendamment du transporteur, vers un poste de travail, dans lequel, audit poste de travail, le produit est soumis à des opérations tout en étant maintenu immobile,

d) le couplage des berceaux à un chariot-navette tandem,

e) et l'indexage du chariot-navette tandem, avec le berceau et indépendamment du transporteur, le long d'un trajet entre le transporteur et le chariot-navette de poste de travail.

11. Procédé suivant la revendication 10, caractérisé en ce que les berceaux sont indexés à partir du transporteur par le chariot-navette tandem, ce chariot-navette tandem opérant en tant que premier chariot-navette accumulateur.

12. Procédé suivant la revendication 11, caractérisé en ce que des berceaux sont transférés du premier chariot-navette accumulateur au chariot-navette de travail au moyen d'un second chariot-navette accumulateur.

13. Procédé suivant la revendication 10, caractérisé en ce que des berceaux sont transférés du chariot-navette de poste de travail vers le transporteur par l'intermédiaire du chariot-navette tandem.

14. Procédé suivant l'une quelconque des revendications 10 à 13, caractérisé en ce que le chariot-navette de poste de travail est avancé et reculé au moyen d'un arbre d'entraînement tournant présentant un filet hélicoïdal qui est entraîné en rotation dans un sens pour faire avancer le chariot et dans le sens opposé pour faire reculer le chariot.

**Ansprüche**

1. Vorrichtung zum Indexieren aufeinanderfolgender, von einem Förderer (20) abgenommener Produkte, wobei die Produkte von fahrbaren Montagewagen (30, 34, 38) getragen werden und die Montagewagen mit dem Förderer in Eingriff stehen, umfassend

- eine Einrichtung (21) zum aufeinanderfolgenden Lösen der fahrbaren Montagewagen von dem Förderer und

- eine Arbeitsstation zum Arbeiten an einem Produkt, während dieses stationär gehalten wird,

**gekennzeichnet** durch:

- einen Arbeitsstationspendelträger (26b),
- eine Einrichtung zum Koppeln des Trägers mit einem gelösten fahrbaren Montagewagen,
- eine Antriebseinrichtung zum Indexieren des Trägers mit dem fahrbaren Montagewagen und unabhängig von dem Förderer zu der Arbeitsstation und zum Umdrehen des Trägers, um diesen mit einem weiteren fahrbaren Montagewagen in Eingriff zu bringen,
- einen Tandempendelträger (22b, 24b, 28b),
- eine Einrichtung zum Koppeln des Tandempendelträgers mit einem fahrbaren Montagewagen, und
- einer Antriebseinrichtung zum Indexieren des Tandempendelträgers mit dem fahrbaren Montagewagen und unabhängig von dem Förderer entlang eines Weges zwischen dem Förderer und dem Arbeitsstationspendelträger und zum Umdrehen des Tandempendelträgers, um diesen mit einem weiteren fahrbaren Montagewagen in Eingrift zu bringen.

2. Vorrichtung nach Anspruch 1,
dadurch **gekennzeichnet, daß**
der Tandempendelträger ein erster Speicherpendelträger (22a) ist, der zum Indexieren der fahrbaren Montagewagen von dem Förderer angeordnet ist.

3. Vorrichtung nach Anspruch 2,
dadurch **gekennzeichnet, daß**
sich ein zweiter Speicherpendelträger (24a) zwischen dem ersten Speicherpendelträger und dem Arbeitsstationspendelträger befindet.

4. Vorrichtung nach Anspruch 1,
dadurch **gekennzeichnet, daß**
der Tandempendelträger ein Transferpendelträger (28a) zum Rückführen der fahrbaren Montagewagen von dem Arbeitspendelträger zu dem Förderer ist.

5. Vorrichtung nach einem der vorhergehenden Ansprüche,
dadurch **gekennzeichnet, daß**
die Antriebseinrichtung zum Indexieren des Arbeitsstationspendelträgers (26b) oder zum Indexieren des Tandempendelträgers umfaßt:
einen Antriebsschaft (26a), der sich entlang des Weges erstreckt und der ein schraubenförmiges Gewinde aufweist,
eine Folgeeinrichtung auf dem Pendelträger (26b), die mit dem Schaft in dem Gewinde in Eingriff steht und eine Dreheinrichtung (48), die mit dem Schaft gekoppelt ist, um diesen mit einer Drehgeschwindigkeit in einer Richtung zu drehen, um zu bewirken, daß der erste Pendelträger (26b) die Arbeitsstation mit einer größeren Geschwindigkeit als die des Förderers (20) befördert, und um anschließend den Schaft (26a) in der entgegengesetzten Richtung zu drehen, um den Träger (26b) in die entgegengesetzte Richtung zu bewegen.

6. Vorrichtung nach Anspruch 5,
dadurch **gekennzeichnet, daß**
der Antriebsschaft (26a) eine konstante Ganghöhe aufweist, wobei die Dreheinrichtung (48) die Geschwindigkeit des Schaftes (26a) verändern kann, um den Arbeitsstationspendelträger (26b) zu beschleunigen und anschließend den Träger abzubremsen, um ein Fortschreiten desselben zu beenden.

7. Vorrichtung nach Anspruch 5,
dadurch **gekennzeichnet, daß**
das schraubenförmige Gewinde in der Nähe der Enden des Antriebsschaftes (26a) eine geringere Ganghöhe aufweist, wobei die Drehrichtung (48) den Schaft mit einer konstanten Geschwindigkeit drehen kann, um den Pendelträger (26b) zu beschleunigen und anschließend den Pendelträger abzubremsen.

8. Vorrichtung nach Anspruch 1,
dadurch **gekennzeichnet, daß**
drei Tandempendelträger in im wesentlichen einer Linie angeordnet sind, um die gelösten fahrbaren Montagewagen von dem sich bewegenden Förderer (20) zu der Arbeitsstation und anschließend zurück zu dem sich bewegenden Förderer aufeinanderfolgend hin und her zu bewegen, umfassend einen ersten Speicherpendelträger (22a), der so angeordnet ist, daß fahrbare Montagewagen von dem Förderer indexiert werden, einem zweiten Speicherpendelträger (24a), der so angeordnet ist, daß fahrbare Montagewagen von dem ersten Speicherpendelträger zu dem Arbeitsstationspendelträger indexiert werden, und einen Transferpendelträger, der so angeordnet ist, daß die fahrbaren Montagewagen von dem Arbeitspendelträger zu dem Förderer zurückgeführt werden.

9. Vorrichtung nach einem der vorhergehenden Ansprüche,
dadurch **gekennzeichnet, daß**

ein erweiterbarer Abschnitt in einer rückwärtigen Richtung von dem Arbeitspendelträger erweitert wird, wenn sich dieser Pendelträger einer Anfangsposition nähert, und zum Erweitern, daß ein erweiterbarer Abschnitt in einer Vorwärtsrichtung erweitert wird, wenn der Träger befördert wird, um so die Erstreckung des Pendelträgers und dadurch die effektive Länge seiner Bewegung zu vergrößern.

10. Verfahren zum Indexieren von von einem Förderer entfernter aufeinanderfolgender Produkte, wobei die Produkte durch fahrbare Montagewagen (30, 34, 38) getragen werden, und die fahrbaren Montagewagen mit dem Förderer in Eingriff stehen, umfassend die folgenden Schritte

a) aufeinanderfolgendes Lösen der fahrbaren Montagewagen von dem Förderer, **gekennzeichnet** durch

b) Koppeln gelöster fahrbarer Montagewagen mit einem Arbeitspendelträger (26b)

c) Indexieren des Trägers mit dem fahrbaren Montagewagen und unabhängig von dem Förderer zu einer Arbeitsstation, wobei das Produkt an der Arbeitsstation bearbeitet wird, während es stationär gehalten wird,

d) Koppeln der fahrbaren Montagewagen mit einem Tandempendelträger, und

e) Indexieren des Tandempendelträgers mit dem fahrbaren Montagewagen und unabhängig von dem Förderer entlang eines Weges zwischen dem Förderer und dem Arbeitsstationspendelträger.

11. Verfahren nach Anspruch 10. dadurch **gekennzeichnet,** daß die fahrbaren Montagewagen von dem Förderer durch den Tandempendelträger indexiert werden, wodurch der Tandempendelträger als ein erster Speicherpendelträger arbeitet.

12. Verfahren nach Anspruch 11, dadurch **gekennzeichnet,** daß die fahrbaren Montagewagen von dem ersten Speicherpendelträger zu dem Arbeitspendelträger mit Hilfe eines zweiten Speicherpendelträgers übertragen werden.

13. Verfahren nach Anspruch 10, dadurch **gekennzeichnet,** daß die fahrbaren Montagewagen von dem Arbeitsstationspendelträger über den Tandempendelträger zu dem Förderer befördert werden.

14. Verfahren nach einem der Ansprüche 10 bis 13, dadurch **gekennzeichnet,** daß

der Arbeitsstationspendelträger mit Hilfe eines drehbaren Antriebsschaftes vor- und zurückbefördert wird, der ein schraubenförmiges Gewinde aufweist, das in einer Richtung gedreht wird, um den Träger zu befördern, und das in entgegengesetzter Richtung gedreht wird, um eine entgegengesetzte Bewegung des Trägers zu bewirken.

**Fig. 1.**

32
112
36
48 50
52
102 54 96 102 54 44 ~26c
26a 96 102 42 28a
112 26 26b 116 114 52 28
36a

**Fig. 2.**

36 36a
46
26
26a 42 48 44
48 40 26c 32
52 54 102 56 102 54 26b 52 50 52

Fig. 3.

Fig. 4.

Fig. 5.

Fig. 6.

**Fig. 7.**

**Fig. 8.**

**Fig. 9.**

**Fig.10.**

**Fig.11.**